# FASCICULE DE BREVET EUROPEEN

(11) **EP 3 453 953 B1**
(45) Date de publication et mention de la délivrance du brevet: **04.03.2020**
(21) Numéro de dépôt: 18190885.6
(22) Date de dépôt: 27.08.2018
(51) Int. Cl.: B29C 65/00, F21S 43/27

(54) **BLOC OPTIQUE À TROUS PÉRIPHÉRIQUES D'ÉVACUATION D'ÉLÉMENTS SALISSANTS EXTÉRIEURS**
OPTISCHER BLOCK MIT PERIPHEREN ÖFFNUNGEN ZUM ABLEITEN VON VERSCHMUTZENDEN EXTERNEN ELEMENTEN
OPTICAL UNIT WITH PERIPHERAL HOLES FOR DISCHARGE OF EXTERNAL FOULING ELEMENTS

(30) Priorité: 08.09.2017 FR 1758284
(43) Date de publication de la demande: 13.03.2019
(73) Titulaire: PSA Automobiles SA, 78300 Poissy (FR)
(72) Inventeur: VIDEIRA, FILIPE, 78140 VELIZY VILLACOUBLAY (FR)

(56) Documents cités:
- EP-A2- 0 735 310
- JP-A- 2004 273 210
- US-A1- 2005 117 362

## Description

L'invention concerne les blocs optiques qui équipent certains véhicules, et plus précisément ceux qui comprennent un boîtier auquel est solidarisée une glace de protection et qui assurent au moins une fonction photométrique d'éclairage ou de signalisation.

Certains blocs optiques de véhicule, généralement de type automobile, comprennent un boîtier qui délimite une cavité logeant au moins une source de photons participant à au moins une fonction photométrique, et comprenant un premier bord périphérique auquel est solidarisé un second bord périphérique d'une glace de protection qui ferme cette cavité.

Cette solidarisation se fait généralement par soudage par vibrations, soudage de type dit miroir ou soudage laser, via au moins une dent de soudure qui est définie sur une face arrière du second bord périphérique de la glace de protection. Il n'est en effet pas possible techniquement que la soudure se fasse, sans dent(s), directement sur la face arrière du second bord périphérique du fait des dispersions dimensionnelles des boîtiers et des glaces de protection et que le bourrelet de soudure doit être invisible lorsque l'on est placé du côté de la face avant de la glace de protection.

La dent de soudure étant érigée en biais sur la face arrière du second bord périphérique, elle délimite avec cette face arrière une cuvette périphérique à l'intérieur de laquelle viennent se loger et s'accumuler des éléments salissants venus de l'extérieur, comme par exemple des poussières, des particules, de la terre, de la boue ou de l'eau. La glace de protection étant partout translucide, y compris au niveau de son second bord périphérique, les éléments accumulés dans la cuvette périphérique deviennent progressivement visibles lorsque l'on est placé du côté de la face avant de la glace de protection. Cette visibilité est renforcée lorsque la glace de protection a une couleur cristal translucide. Il en résulte une impression de salissure, impossible à nettoyer, ce qui nuit à la qualité perçue du véhicule.

Afin de masquer les éléments accumulés, il est possible de rendre opaques les faces arrière des glaces de protection par bi-injection de matière lors du moulage. Cependant, cela n'est pas toujours possible, en raison d'une difficulté technique et/ou d'un problème de surcoût et/ou d'un choix stylistique.

JP 2004/273.210 divulgue un bloc optique selon le préambule de la revendication 1.

L'invention a donc notamment pour but d'améliorer la situation.

Elle propose notamment à cet effet un bloc optique destiné à équiper un véhicule et comprenant un boîtier, délimitant une cavité logeant au moins une source de photons participant à au moins une fonction photométrique, et comprenant un premier bord périphérique auquel est solidarisé un second bord périphérique d'une glace de protection fermant cette cavité.

Ce bloc optique se caractérise par le fait que le premier bord périphérique comprend une partie périphérique incurvée vers l'arrière en s'éloignant du second bord périphérique et munie, d'une part, d'au moins une dent de soudure soudée au second bord périphérique, et, d'autre part, dans une partie supérieure, d'une multiplicité de trous traversants placés à l'extérieur de la cavité après la dent de soudure et permettant le passage d'éléments venus de l'extérieur vers une face externe du boîtier.

Grâce aux trous traversants périphériques, il est désormais possible d'évacuer une partie au moins des éléments salissants venant de l'extérieur vers la face externe du boîtier, dans une zone qui est invisible lorsque l'on est placé du côté de la face avant de la glace de protection, ce qui permet de les rendre quasiment invisibles.

Le bloc optique selon l'invention peut comporter d'autres caractéristiques qui peuvent être prises séparément ou en combinaison, et notamment :
- la partie périphérique peut comprendre des zones pleines entre des trous traversants voisins. Dans ce cas, chaque zone pleine peut présenter une forme convexe favorisant un écoulement vers les trous traversants voisins d'éléments qui sont venus de l'extérieur et qui l'ont atteint ;
- les trous traversants peuvent être définis les uns à la suite des autres sur une ligne périphérique ;
- les trous traversants peuvent présenter une forme générale parallélépipédique rectangle ;
- la/chaque dent de soudure peut être soudée au second bord périphérique par un soudage qui est choisi parmi un soudage par vibrations, un soudage de type dit miroir, un soudage laser, et un soudage infrarouge ;
- il peut constituer un feu arrière de véhicule.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et la présence de quelques niveaux de gris), sur lesquels :
- la figure 1 illustre schématiquement, dans une vue en perspective de côté, une partie supérieure d'un exemple de réalisation d'un bloc optique selon l'invention, avant qu'il n'équipe un véhicule,
- la figure 2 illustre schématiquement, dans une vue en perspective du dessus, une petite partie de la partie supérieure du bloc optique de la figure 1,
- la figure 3 illustre schématiquement, dans une vue en perspective du côté arrière, une petite partie de la partie supérieure du bloc optique de la figure 1, et
- la figure 4 illustre schématiquement, dans une vue en coupe longitudinale (plan XZ), la partie supérieure du bloc optique de la figure 1, une fois ce dernier solidarisé à une partie de la carrosserie d'un véhicule.

L'invention a notamment pour but de proposer un bloc optique BO destiné à équiper un véhicule et comprenant un boîtier BB et une glace de protection GP solidarisés l'un à l'autre et permettant d'éviter une accumulation visible d'éléments salissants.

On considère dans ce qui suit, à titre d'exemple non limitatif, que le bloc optique BO est destiné à équiper un véhicule de type automobile, comme par exemple une voiture. Mais l'invention n'est pas limitée à cette application. En effet, le bloc optique BO peut faire partie de n'importe quel véhicule (terrestre, maritime (ou fluvial), ou aérien), dès lors qu'il comprend au moins une partie (par exemple de carrosserie ou de bouclier) pouvant être équipée d'au moins un bloc optique devant assurer au moins une fonction photométrique d'éclairage ou de signalisation.

Par ailleurs, on considère dans ce qui suit, à titre d'exemple non limitatif, que le bloc optique BO est un feu arrière. Mais il pourrait également s'agir d'un feu avant ou d'un projecteur avant (ou phare).

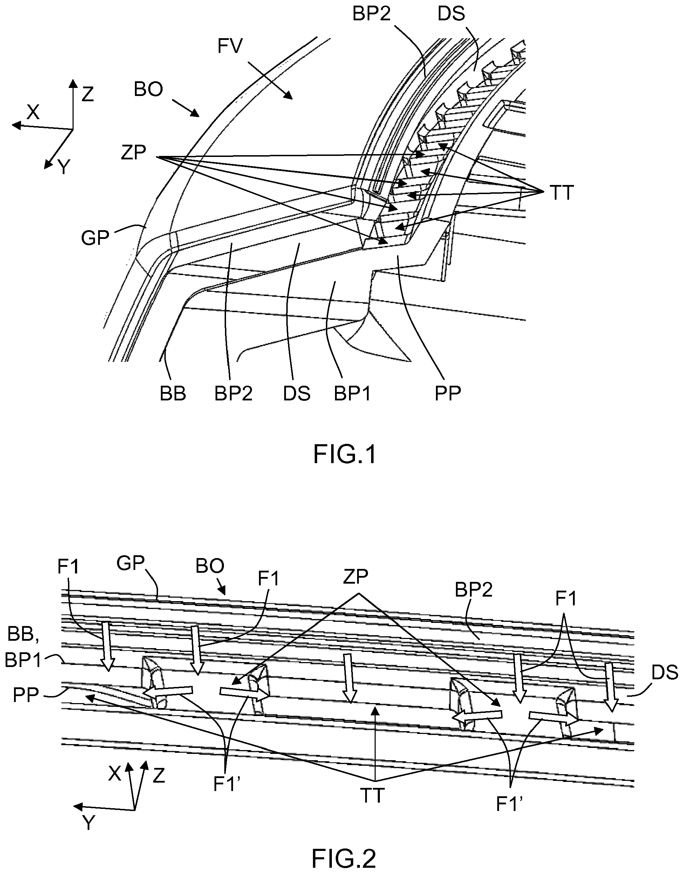

Sur les figures 1 à 4, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur les figures 1 à 3, une partie supérieure d'un exemple de réalisation d'un bloc optique BO selon l'invention (ici un feu arrière), avant qu'il n'équipe un véhicule.

Comme cela est partiellement illustré, un bloc optique BO, selon l'invention, comprend un boîtier BB, une glace de protection GP, et au moins une source de photons (et d'éventuels éléments optiques) participant à au moins une fonction photométrique.

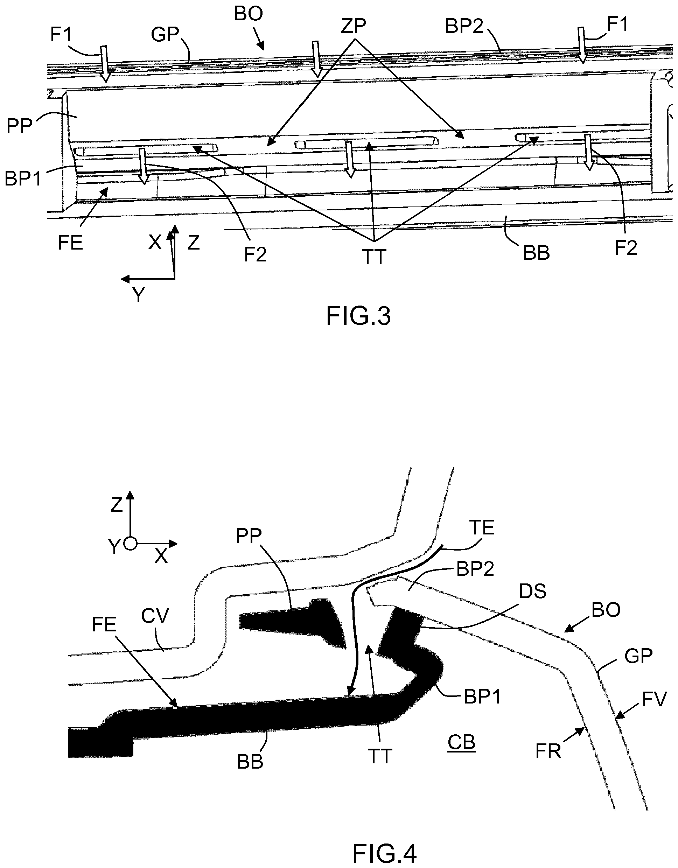

Le boîtier BB est destiné à être solidarisé fixement à une partie d'un véhicule (ici située à l'arrière), comme par exemple une partie de carrosserie CV (voir figure 4) ou un bouclier ou encore une porte de coffre (éventuellement un hayon).

De préférence, le boîtier BB est réalisé dans un matériau opaque et rigide, comme par exemple une matière plastique ou synthétique. Dans ce cas, il peut être réalisé par moulage.

Egalement de préférence, la glace de protection GP est réalisée dans un matériau translucide (éventuellement de couleur cristal) et rigide, comme par exemple une matière plastique ou synthétique. Dans ce cas, elle peut être réalisée par moulage.

Comme cela apparaît sur la figure 4, le boîtier BB délimite une cavité CB logeant chaque source de photons et chaque éventuel élément optique participant à au moins une fonction photométrique, et la glace de protection GP ferme cette cavité CB.

Par ailleurs, le boîtier BB comprend un premier bord périphérique BP1 auquel est solidarisé un second bord périphérique BP2 de la glace de protection GP.

Selon l'invention, ce premier bord périphérique BP1 comprend une partie périphérique PP qui est incurvée vers l'arrière en s'éloignant du second bord périphérique BP2 et qui définit une espèce de muret destiné à masquer les pièces techniques (notamment de fixation) du bloc optique BO, et en particulier du boîtier BB, qui sont visibles au travers de la glace de protection GP.

Cette partie périphérique PP est munie, d'une part, d'au moins une dent de soudure DS qui est soudée à la face arrière FR du second bord périphérique BP2 (voir figure 4), et, d'autre part, dans une partie supérieure, d'une multiplicité de trous traversants TT périphériques. Ces derniers (TT) sont placés à l'extérieur de la cavité CB après la/chaque dent de soudure DS et permettent le passage d'éléments salissants venus de l'extérieur vers une face externe FE du boîtier BB (flèches F1 et F1' de la figure 2, flèches F1 et F2 de la figure 3, et trajet TE de la figure 4).

On notera que la (chaque) dent de soudure DS est préférentiellement définie sur la face arrière FR du second bord périphérique BP2 dans les cas d'un soudage de type miroir et d'un soudage par vibrations (décrits plus loin).

On entend ici par « élément salissant » tout corps solide ou liquide venant de l'extérieur du bloc optique BO et de nature à salir. Il pourra, par exemple, s'agir d'une poussière, d'une particule, de terre, de boue ou d'eau.

Désormais, et comme illustré sur les figures 2 à 4 et par le trajet TE, les éléments salissants qui passent entre la partie de carrosserie CV et le second bord périphérique BP2 (au moins dans la partie supérieure de la glace de protection GP), pénètrent par les faces supérieures des trous traversants TT (flèches F1 et F1'), puis traversent les trous traversants TT, puis ressortent par les faces inférieures des trous traversants TT (flèches F2), et finalement atteignent la face externe FE du boîtier BB. Une fois parvenus sur la face externe FE du boîtier BB (et donc évacués), les éléments salissants sont masqués par la partie périphérique PP du premier bord périphérique BP1, opaque et incurvée vers l'arrière, et donc sont masqués par cette partie périphérique PP. Ils deviennent par conséquent invisibles lorsque l'on est placé du côté de la face avant FV de la glace de protection GP, ce qui permet d'éviter qu'ils provoquent des salissures impossibles à nettoyer et susceptibles de nuire à la qualité perçue du véhicule.

On notera qu'afin d'éviter que des éléments salissants s'accumulent sur des zones pleines ZP situées entre des trous traversants TT voisins définis dans la partie périphérique PP, chaque zone pleine ZP peut avantageusement présenter une forme convexe sur sa face supérieure. Cette forme convexe favorise l'écoulement vers les trous traversants TT voisins (flèches F1' de la figure 2) d'éléments salissants venus de l'extérieur et ayant atteint une zone pleine ZP. On comprendra en effet que la forme convexe offre des pentes orientées vers les trous traversants TT voisins qui facilite le transfert (flèches F1') vers ces derniers (TT) des éléments salissants du fait de leur vitesse relative par rapport au véhicule.

On notera également, comme illustré non limitativement sur les figures 1 à 3, que les trous traversants TT peuvent être définis les uns à la suite des autres sur une ligne périphérique. Mais dans une variante ils pourraient être définis sur au moins deux lignes périphériques sensiblement parallèles entre elles et décalées suivant la direction longitudinale X.

On notera également, comme illustré non limitativement sur les figures 1 à 3, que les trous traversants TT peuvent présenter une forme générale parallélépipédique rectangle. Mais ils pourraient présenter d'autres formes générales, par exemple cylindrique oblongue (éventuellement ronde ou elliptique).

Les dimensions des trous traversants TT sont choisies en fonction de la taille du bloc optique BO et de la taille de la partie périphérique PP, afin de ne pas rendre cette dernière (PP) trop fragile ou déformable.

On notera également que la/chaque dent de soudure DS peut être soudée au second bord périphérique BP2 par un soudage qui est choisi, par exemple, parmi un soudage par vibrations, un soudage de type dit miroir, un soudage laser et un soudage infrarouge.

La technique de soudage miroir est bien connue de l'homme de l'art. Elle consiste à préchauffer chaque dent de soudure DS afin de l'écraser par application d'efforts selon une même direction mais des sens opposés respectivement sur le boîtier BB et la glace de protection GP.

La technique de soudage par vibrations est bien connue de l'homme de l'art. Elle consiste à faire fondre chaque dent de soudure DS par frottements induits par des vibrations appliquées à la glace de protection GP alors que l'on plaque fermement le premier bord périphérique BP1 du boîtier BB contre elle (DS).

La technique de soudage laser est bien connue de l'homme de l'art. Elle consiste à faire fondre chaque dent de soudure DS au moyen d'un faisceau laser afin de l'écraser en plaquant le second bord périphérique BP2 de la glace de protection GP contre le premier bord périphérique BP1 du boîtier BB. En général, dans le cas d'un soudage laser la (chaque) dent de soudure DS est préférentiellement définie sur le premier bord périphérique BP1.

L'invention offre plusieurs avantages, parmi lesquels :
- elle permet d'améliorer la qualité perçue, sans modification du style, grâce au retardement de l'accumulation de salissures sur la périphérie supérieure d'un bloc optique,
- elle n'entraine pas de surcoût,
- elle permet de s'affranchir de la réalisation d'un second bord périphérique opaque de la glace de protection (ce qui nécessite davantage de matière, et un outillage plus coûteux).

## Revendications

1. Bloc optique (BO) destiné à équiper un véhicule et comprenant un boîtier (BB), délimitant une cavité (CB) logeant au moins une source de photons participant à au moins une fonction photométrique, et comprenant un premier bord périphérique (BP1) auquel est solidarisé un second bord périphérique (BP2) d'une glace de protection (GP) fermant ladite cavité (CB), ledit premier bord périphérique (BP1) comprenant une partie périphérique (PP) incurvée vers l'arrière en s'éloignant dudit second bord périphérique (BP2) et munie, d'une part, d'au moins une dent de soudure (DS) soudée audit second bord périphérique (BP2), **caractérisé en ce que** la partie périphérique (PP) incurvée vers l'arrière est munie d'autre part, dans une partie supérieure, d'une multiplicité de trous traversants (TT) placés à l'extérieur de ladite cavité (CB) après ladite dent de soudure (DS) et permettant le passage d'éléments venus de l'extérieur vers une face externe (FE) dudit boîtier (BB).

2. Bloc optique selon la revendication 1, **caractérisé en ce que** ladite partie périphérique (PP) comprend des zones pleines (ZP) entre des trous traversants (TT) voisins, chaque zone pleine (ZP) présentant une forme convexe favorisant un écoulement vers les trous traversants (TT) voisins d'éléments venus de l'extérieur et l'ayant atteint.

3. Bloc optique selon la revendication 1 ou 2, **caractérisé en ce que** lesdits trous traversants (TT) sont définis les uns à la suite des autres sur une ligne périphérique.

4. Bloc optique selon l'une des revendications 1 à 3, **caractérisé en ce que** lesdits trous traversants (TT) présentent une forme générale parallélépipédique rectangle.

5. Bloc optique selon l'une des revendications 1 à 4, **caractérisé en ce que** ladite dent de soudure (DS) est soudée audit second bord périphérique (BP2) par un soudage choisi parmi un soudage par vibrations, un soudage de type dit miroir, un soudage laser, et un soudage infrarouge.

6. Bloc optique selon l'une des revendications 1 à 5, **caractérisé en ce qu'**il constitue un feu arrière de véhicule.

7. Véhicule, **caractérisé en ce qu'**il comprend au moins un bloc optique (BO) selon l'une des revendications précédentes.

8. Véhicule selon la revendication 7, **caractérisé en ce qu'**il est de type automobile.

## Patentansprüche

1. Optischer Block (BO), der dazu bestimmt ist, ein Fahrzeug auszustatten, und der ein Gehäuse (BB) umfasst, das einen Hohlraum (CB) abgrenzt, der mindestens eine Photonenquelle unterbringt, die an mindestens einer fotometrischen Funktion teilnimmt, und einen ersten Umfangsrand (BP1) umfasst, an dem ein zweiter Umfangsrand (BP2) eines Schutzglases (GP), das den Hohlraum (CB) schließt, fest verbunden ist, wobei der erste Umfangsrand (BP1) einen Umfangsteil (PP) umfasst, der nach hinten gebogen ist und sich von dem zweiten Umfangsrand (BP2) entfernt, und der einerseits mit mindestens einem Schweißzahn (DS) versehen ist, der an den zweiten Umfangsrand (BP2) geschweißt ist, **dadurch gekennzeichnet, dass** der Umfangsteil (PP), der nach hinten gebogen ist, andererseits in einem oberen Teil mit einer Vielzahl durchgehender Löcher (TT) versehen ist, die außerhalb des Hohlraums (CB) nach dem Schweißzahn (DS) platziert sind und das Durchgehen von Elementen, die von außen kommen, zu einer Außenfläche (FE) des Gehäuses (BB) erlauben.

2. Optischer Block nach Anspruch 1, **dadurch gekennzeichnet, dass** der Umfangsteil (PP) massive Zonen (ZP) zwischen benachbarten durchgehenden Löchern (TT) umfasst, wobei jede massive Zone (ZP) eine konvexe Form aufweist, die ein Abfließen von Elementen, die von außen kommen und sie erreicht haben, zu den benachbarten durchgehenden Löchern (TT) begünstigt.

3. Optischer Block nach Anspruch 1 oder 2, **dadurch gekennzeichnet, dass** die durchgehenden Löcher (TT) nacheinander auf einer Umfangslinie definiert sind.

4. Optischer Block nach einem der Ansprüche 1 bis 3, **dadurch gekennzeichnet, dass** die durchgehenden Löcher (TT) eine allgemeine Form eines rechteckigen Parallelepipeds aufweisen.

5. Optischer Block nach einem der Ansprüche 1 bis 4, **dadurch gekennzeichnet, dass** der Schweißzahn (DS) an den zweiten Umfangsrand (BP2) durch ein Schweißen geschweißt ist, das aus einem Vibrationsschweißen, einem sogenannten Spiegelschweißen, einem Laserschweißen und einem Infrarotschweißen ausgewählt ist.

6. Optischer Block nach einem der Ansprüche 1 bis 5, **dadurch gekennzeichnet, dass** er eine Kraftfahrzeugrückleuchte bildet.

7. Fahrzeug, **dadurch gekennzeichnet, dass** es mindestens einen optischen Block (BO) nach einem der vorstehenden Ansprüche umfasst

8. Fahrzeug nach Anspruch 7, **dadurch gekennzeichnet, dass** es vom Typ Kraftfahrzeug ist.

## Claims

1. An optical unit (BO) intended to equip a vehicle and including a casing (BB), delimiting a cavity (CB) housing at least one source of photons participating in at least one photometric function, and including a first peripheral edge (BP1) to which there is secured a second peripheral edge (BP2) of a protection glass (GP) closing said cavity (CB), said first peripheral edge (BP1) including a peripheral part (PP) that is incurved towards the rear, away from said second peripheral edge (BP2) and provided, on the one hand, with at least one welding tooth (DS) welded to said second peripheral edge (BP2), **characterized in that** the peripheral part (PP) which is uncurved towards the rear is provided, on the other hand, in an upper portion, with a plurality of through-holes (TT) placed on the exterior of said cavity (CB) after said welding tooth (DS) and permitting the passage of elements which have come from the exterior to pass towards an external face (FE) of said casing (BB).

2. The optical unit according to Claim 1, **characterized in that** said peripheral part (PP) includes solid zones (ZP) between adjacent through-holes (TT), each solid zone (ZP) having a convex shape promoting a flow towards the adjacent through-holes (TT) of elements which have come from the exterior and having reached it.

3. The optical unit according to Claim 1 or 2, **characterized in that** said through-holes (TT) are defined one following the other on a peripheral line.

4. The optical unit according to one of Claims 1 to 3, **characterized in that** said through-holes (TT) have a general parallelepipedic rectangle shape.

5. The optical unit according to one of Claims 1 to 4, **characterized in that** said welding tooth (DS) is welded to said second peripheral edge (BP2) by a welding selected from a welding by vibrations, a welding of the type known as mirror welding, a laser welding, and an infrared welding.

6. The optical unit according to one of Claims 1 to 5, **characterized in that** it constitutes a rear light of a vehicle.

7. A vehicle, **characterized in that** it includes at least one optical unit (BO) according to one of the preceding claims.

8. The vehicle according to Claim 7, **characterized in that** it is of the motor vehicle type.
